# EUROPEAN PATENT APPLICATION

(11) **EP 2 458 294 A1**
(43) Date of publication of application: **30.05.2012**
(21) Application number: 11190261.5
(22) Date of filing: 23.11.2011
(51) Int. Cl.: F24F 5/00, B60H 1/00, F25B 21/02

(54) **Air conditioner**

(30) Priority: 24.11.2010 JP 2010260849
(71) Applicant: Kabushiki Kaisha Toyota Jidoshokki, Kariya-shi, Aichi 448-8671 (JP)
(72) Inventor: Akiyama, Hirokuni, Kariya-shi, Aichi 448-8671 (JP); Kato, Hirohisa, Kariya-shi, Aichi 448-8671 (JP); Morisaku, Naoto, Kariya-shi, Aichi 448-8671 (JP); Yokomachi, Naoya, Kariya-shi, Aichi 448-8671 (JP); Murase, Masakazu, Kariya-shi, Aichi 448-8671 (JP); Ban, Takahisa, Kariya-shi, Aichi 448-8671 (JP)
(74) Representative: TBK

(57) **Abstract**

The air conditioner includes an air-conditioning core, a first air-conditioning passage, a liquid passage and a second air-conditioning passage. The core includes a Peltier device having first and second surfaces, a first surface-side passage and a second surface-side passage. The second surface-side passage has a first passage and a second passage that transfer heat therebetween. The first air-conditioning passage is connected to the first surface-side passage for allowing first air-conditioning air in the first air-conditioning passage to flow through the first surface-side passage. The liquid passage is connected to the first passage for allowing liquid that serves as a heat transfer medium to flow through the first passage. The second air-conditioning passage is connected to the second passage for allowing second air-conditioning air in the second air-conditioning passage to flow through the second passage. The first air-conditioning air and the second air-conditioning air are usable for air conditioning a room.

## Description

### BACKGROUND OF THE INVENTION

The present invention relates to an air conditioner.

Japanese Patent Application Publication No. 8-200877 discloses an air conditioner having an air-conditioning core. The air-conditioning core includes a Peltier device having a first surface that serves as a heat absorbing surface and a second surface that serves as a heat radiating surface, a first surface-side passage located adjacent to the first surface of the Peltier device and a second surface-side passage located adjacent to the second surface of the Peltier device. A first air-conditioning passage is connected to the first surface-side passage and allows first air-conditioning air used for air conditioning a room to flow therethrough via a first fan. A second air-conditioning passage is connected to the second surface-side passage and allows second air-conditioning air used for air conditioning the room to flow therethrough via a second fan. The air conditioner has therein a valve that makes or shuts off the fluid communication between the first air-conditioning passage and the second air-conditioning passage.

In the air-conditioning core of the above-described air conditioner, the Peltier device absorbs heat from the first air-conditioning air in the first surface-side passage and radiates heat to the second air-conditioning air in the second surface-side passage, so that the first air-conditioning air is cooled and the second air-conditioning air is heated. Thus, the air conditioner allows the first air-conditioning air to cool the room and also allows the second air-conditioning air to heat the room.

When the valve is opened to make the communication between the first air-conditioning passage and the second air-conditioning passage, the cooled and dehumidified first air-conditioning air is reheated or conditioned by the second air-conditioning air. Thus, the above-described air conditioner functions to dehumidify the air in the room while controlling the temperature of the air in the room.

In the above-described air conditioner, the medium from and to which heat is absorbed and radiated by the Peltier device, respectively, or the medium via which heat transfer is performed by the Peltier device, is restricted to air. The Peltier device using air as the medium can transfer only a small amount of heat. Thus, it is hard to cool the first air-conditioning air efficiently and to heat the second air-conditioning air efficiently. Therefore, there is fear that the room may not be cooled or heated sufficiently. There is also fear that the air in the room may not be dehumidified sufficiently for the same reason.

The present invention which has been made in view of the above problems is directed to an air conditioner that is capable of providing sufficient air conditioning of a room.

### SUMMARY OF THE INVENTION

In accordance with an aspect of the present invention, the air conditioner includes an air-conditioning core, a first air-conditioning passage, a liquid passage and a second air-conditioning passage. The air-conditioning core includes a Peltier device having a first surface and a second surface one of which serves as a heat absorbing surface and the other of which serves as a heat radiating surface, a first surface-side passage located adjacent to the first surface of the Peltier device and a second surface-side passage located adjacent to the second surface of the Peltier device. The second surface-side passage has a first passage and a second passage that transfer heat therebetween. The first air-conditioning passage is connected to the first surface-side passage for allowing first air-conditioning air in the first air-conditioning passage to flow through the first surface-side passage. The first air-conditioning air is usable for air conditioning a room. The liquid passage is connected to the first passage for allowing liquid that serves as a heat transfer medium to flow through the first passage. The second air-conditioning passage is connected to the second passage for allowing second air-conditioning air in the second air-conditioning passage to flow through the second passage. The second air-conditioning air is usable for air conditioning the room.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic configuration diagram showing an air conditioner according to a first embodiment of the present invention;
Fig. 2 is a schematic diagram showing a controller of the air conditioner of Fig. 1;
Fig. 3 is an enlarged schematic cross-sectional view showing the state of an air-conditioning core of the air conditioner of Fig. 1 when the air conditioner is at a stop;
Fig. 4 is an enlarged schematic cross-sectional view showing the state of the air-conditioning core of the air conditioner of Fig. 1 when the air conditioner is in cooling or heating operation;
Fig. 5 is an enlarged schematic cross-sectional view showing the state of the air-conditioning core of the air conditioner of Fig. 1 when the air conditioner is in dehumidification operation;
Fig. 6 is a cross-sectional view similar to Fig. 5, but illustrating the convection flow of air or cooling water in a first passage of the air-conditioning core;
Fig. 7 is a schematic diagram showing an air conditioner according to a second embodiment of the present invention;
Fig. 8 is a perspective view showing the state of an air-conditioning core of the air conditioner of Fig. 7 when the air conditioner is at a stop;
Fig. 9 is a cross sectional view taken along the line A-A' of Fig. 7, showing the air-conditioning core of the air conditioner that is at a stop;
Fig. 10 is a cross sectional view taken along the line A-A' of Fig. 7, showing the air-conditioning core of the air conditioner that is in cooling or heating operation;
Fig. 11 is a cross sectional view taken along the line A-A' of Fig. 7, showing the air-conditioning core of the air conditioner that is in dehumidification operation;
Fig. 12 is a cross sectional view similar to Fig. 11, but illustrating the convection flow of air or cooling water flowing in a first passage of the air-conditioning core;
Fig. 13 is a cross sectional view similar to Fig. 9, but showing an air-conditioning core of an air conditioner according to a third embodiment of the present invention and illustrating the state when the air conditioner is at a stop;
Fig. 14 is a cross sectional view of an air-conditioning core of an air conditioner according to a fourth embodiment of the present invention, showing the state when the air conditioner is at a stop; and
Fig. 15 is a cross sectional view of an air-conditioning core of an air conditioner according to a fifth embodiment of the present invention, showing the state when the air conditioner is at a stop.

### DETAILED DESCRIPTION OF THE EMBODIMENTS

The following will describe the air conditioners according to the embodiments of the present invention with reference to the accompanying drawings.

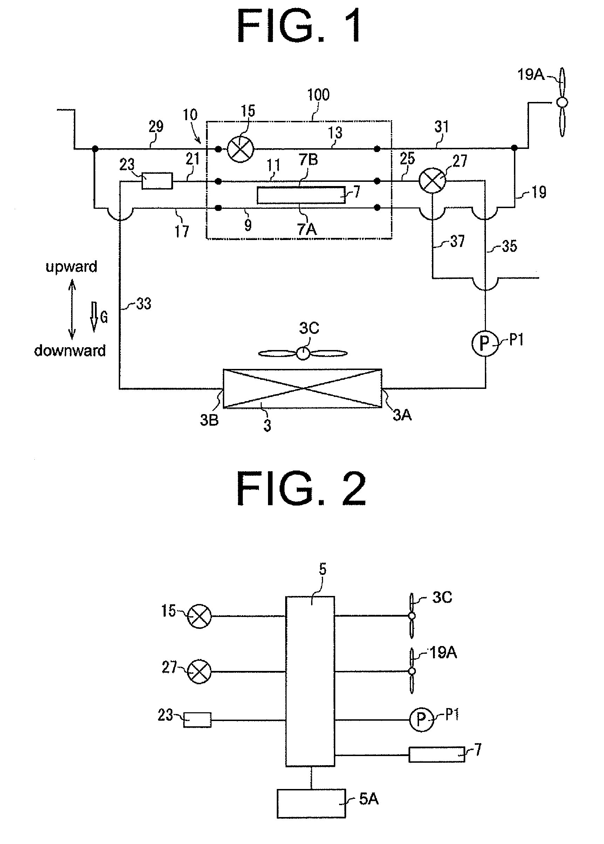

Referring to Fig. 1 showing the air conditioner of the first embodiment, the air conditioner is mounted on a vehicle for air conditioning the cabin of the vehicle or vehicle interior. The air conditioner includes an air-conditioning core 100, a radiator 3, pipes 17, 19, 21, 25, 33, 35, 29 and 31 and a controller 5 which is shown in Fig. 2. The pipes 17 and 19 serve as the first air-conditioning passage of the present invention. The pipes 21, 25, 33 and 35 serve as the liquid passage of the present invention. The pipes 29 and 31 serve as the second air-conditioning passage of the present invention. The controller 5 is connected to a battery 5A that serves as the power source of the present invention. It is noted that gravity G shown in Fig. 1 acts on the air-conditioning core 100 of the first embodiment downward as seen in Fig. 1. The same is true of the second through fifth embodiments as will be described later.

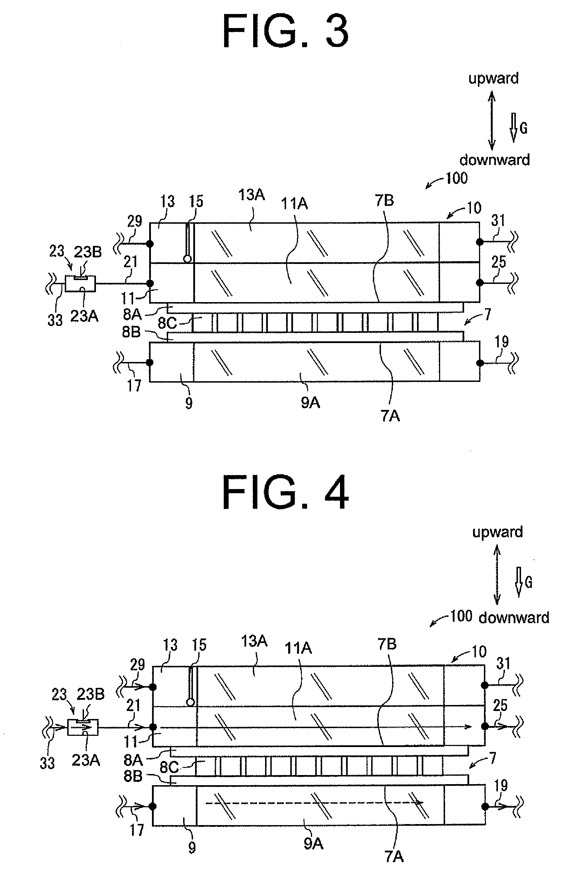

The air-conditioning core 100 has a Peltier device 7 with a first surface 7A and a second surface 7B, a first surface-side passage 9 located adjacent to the first surface 7A of the Peltier device 7 and a second surface-side passage 10 located adjacent to the second surface 7B, as shown in Fig. 3. The first surface 7A is the lower surface of the Peltier device 7. The Peltier device 7 has an insulated substrate 8A forming the first surface 7A, an insulated substrate 8B forming the second surface 7B, and a plurality of thermoelectric conversion elements 8C held between the insulated substrates 8A and 8B. The second surface-side passage 10 includes a first passage 11 and a second passage 13 that can transfer heat therebetween. An electrically-operated flap valve 15 is connected in the second passage 13. As shown in Fig. 2, the flap valve 15 and the Peltier device 7 are electrically connected to the battery 5A.

As shown in Fig. 3, the Peltier device 7, the first passage 11 and the second passage 13 are disposed in such superposed relation that the first passage 11 is superposed on the second surface 7B of the Peltier device 7 and the second passage 13 is superposed on the first passage 11. That is, the second passage 13 is located on the opposite side of the first passage 11 from the Peltier device 7. The first surface-side passage 9 has therein a first air-conditioning fin 9A, the first passage 11 of the second surface-side passage 10 has therein a heat source-side fin 11A, and the second passage 13 of the second surface-side passage 10 has therein a second air-conditioning fin 13A. Each of the fins 9A, 11A and 13A is formed in a wavy manner as seen in cross section so as to extend in the direction in which the cooling water or air flows. Each of the fins 9A, 11A and 13A is formed so as to extend through the passages 9, 11 and 13 from the upper end to the lower end of the respective passages. A plurality of radiator plates may be used as each of the fins 9A, 11A and 13A.

The first surface-side passage 9 is connected at the upstream end thereof as seen in the direction of air flowing through the passage 9 to one end of the pipe 17. The pipe 17 is opened at the other end thereof to the vehicle interior (not shown) for allowing vehicle's inside air to be supplied into the air conditioner. The air supplied into the air conditioner, which serves as the first air-conditioning air of the present invention, is allowed to flow through the pipe 17. The first surface-side passage 9 is connected at the downstream end thereof to one end of the pipe 19. The pipe 19 is opened at the other end thereof to the vehicle interior (not shown). An air-conditioning fan 19A is located at the other end of the pipe 19 as shown in Fig. 1, and electrically connected to the battery 5A, as shown in Fig. 2. The air-conditioning fan 19A may be located at the other end of the pipe 17.

The first passage 11 of the second surface-side passage 10 is connected at the upstream end thereof as seen in the direction of cooling water or air flowing through the passage 11 to one end of the pipe 21, as shown in Fig. 3. The pipe 21 is connected at the other end thereof to a relief valve 23 which will be described later. The pipe 21 allows cooling water or air to flow therethrough. The cooling water or air serves as the heat exchange medium of the present invention. The first passage 11 is connected at the downstream end thereof to one end of the pipe 25. The pipe 25 is connected at the other end thereof to a three-way valve 27, as shown in Fig. 1. The three-way valve 27 and the relief valve 23 are electrically connected to the battery 5A, as shown in Fig. 2.

The second passage 13 is connected at the upstream end thereof as seen in the direction of air flowing through the passage 13 to one end of the pipe 29, as shown in Fig. 3. The pipe 29 is connected at the other end thereof to the pipe 17, as shown in Fig. 1, and allows the air supplied into the air conditioner via air inlet to flow through the pipe 29. The air supplied into the air conditioner via the air inlet serves as the second air-conditioning air of the present invention. The second passage 13 of the second surface-side passage 10 is connected at the downstream end thereof to one end of the pipe 31, as shown in Fig. 3. The pipe 31 is connected at the other end thereof to the pipe 19, as shown in Fig. 1.

The relief valve 23 has therein a passage 23A in which a valve member 23B is provided. The relief valve 23 is communicable with the atmosphere or the air via the valve member 23B.

As shown in Fig. 1, the radiator 3 has an inlet 3A and an outlet 3B and is configured so as to allow cooling water to flow therethrough. The cooling water in the radiator 3 is cooled or heated by heat exchange with the air surrounding the radiator 3. A radiating fan 3C is located adjacent to the radiator 3 and electrically connected to the battery 5A, as shown in Fig. 2.

As shown in Fig. 1, the outlet 3B of the radiator 3 and the relief valve 23 are interconnected by the pipe 33. The inlet 3A of the radiator 3 and the three-way valve 27 are interconnected by the pipe 35. These pipes 33 and 35 have cooling water flowing therethrough. A motor-driven pump P1 is connected in the pipe 35 and electrically connected to the battery 5A, as shown in Fig. 2. The motor-driven pump P1 may be connected in the pipe 33.

As shown in Fig. 1, a pipe 37 is connected at one end thereof to the three-way valve 27and opened at the other end thereof to the vehicle exterior.

As shown in Fig. 2, the controller 5 is operable to control the operation of the flap valve 15 or the relief valve 23, as well as to appropriately change the magnitude and direction of electric current to be supplied to the Peltier device 7. The battery 5A serves as the power source to be supplied to the Peltier device 7. It is noted that the structure of the controller 5 and the battery 5A is known in the art and the detailed explanation thereof will be omitted.

The following will describe the cooling operation, the heating operation and the dehumidification operation of the above-described air conditioner.

In the cooling operation of the air conditioner, the controller 5 activates the air-conditioning fan 19A and sets the three-way valve 27 in such a position that makes the fluid communication between the pipes 25 and 35 and shuts off the communication between the pipes 25 and 37 and also shuts off the communication between the pipes 35 and 37. In addition, the controller 5 closes the flap valve 15 and sets the relief valve 23 in such a position that makes the communication between the pipes 21 and 33, as shown in Fig. 4. The controller 5 activates the motor-driven pump P1 and the radiating fan 3C. Thus, the air conditioner is operated so that cooling water circulates through the air-conditioning core 100 and the radiator 3.

More specifically, the cooling water flowing out of the radiator 3 through its outlet 3B flows through the pipes 33 and 21, the first passage 11, the pipe 25, the three-way valve 27, the pipe 35 and the motor-driven pump P1 in this order and then flows back into radiator 3 through its inlet 3A. In the air-conditioning core 100, therefore, the cooling water flows through the first passage 11 in the direction of solid arrow in Fig. 4. The first air-conditioning air supplied into the first surface-side passage 9 via the pipe 17 flows in the direction of dashed arrow in Fig. 4. In this state, the controller 5 energizes the Peltier device 7 and controls the direction of electric current so that the first surface 7A of the Peltier device 7 serves as the heat absorbing surface and that the second surface 7B serves as the heat radiating surface.

In the air conditioner, therefore, the Peltier device 7 absorbs heat from the first air-conditioning air in the first surface-side passage 9 and radiates heat to the cooling water in the first passage 11. Since the cooling water has a larger heat capacity than the air, the amount of heat transferred from the second surface 7B of the Peltier device 7 to the cooling water in the first passage 11 is larger than the amount of heat transferred from the second surface 7B of the Peltier device 7 to the air. Since a larger amount of heat is radiated from the second surface 7B of the Peltier device 7, a larger amount of heat is absorbed by the first surface 7A of the Peltier device 7. Thus, the air conditioner allows the first air-conditioning air to be cooled efficiently. Therefore, the air conditioner supplies the cooled first air-conditioning air in the pipe 19 into the vehicle interior via the air-conditioning fan 19A thereby to cool the vehicle interior.

Although the second air-conditioning air is heated by the cooling water in the first passage 11, the second air-conditioning air is not supplied into the vehicle interior because the flap valve 15 is then closed. The cooling water heated by the heat radiation of the Peltier device 7 is cooled in the radiator 3 by heat exchange with the air surrounding the radiator 3.

In the heating operation of the air conditioner, the first air-conditioning air is allowed to flow through the first surface-side passage 9 and the cooling water is allowed to flow through the first passage 11 as in the case of the above-described cooling operation. In this state, the controller 5 causes electric current to be supplied to the Peltier device 7 and controls the flowing direction of the electric current so that the first surface 7A of the Peltier device 7 serves as the heat radiating surface and that the second surface 7B serves as the heat absorbing surface.

As compared to the case where only air is present adjacent to the second surface 7B, a larger amount of heat is absorbed by the second air-conditioning air in the second passage 13. Since a larger amount of heat is absorbed by the second surface 7B of the Peltier device 7, a larger amount of heat is radiated from the first surface 7A of the Peltier device 7. Thus, the air conditioner allows the first air-conditioning air to be heated efficiently, Therefore, the air conditioner supplies the heated first air-conditioning air in the pipe 19 into the vehicle interior via the air-conditioning fan 19A thereby to heat the vehicle interior.

The second air-conditioning air which is cooled by the cooling water in the first passage 11 is not supplied into the vehicle interior because the flap valve 15 is then closed. The cooling water cooled by the heat absorption of the Peltier device 7 is heated in the radiator 3 by heat exchange with the air surrounding the radiator 3.

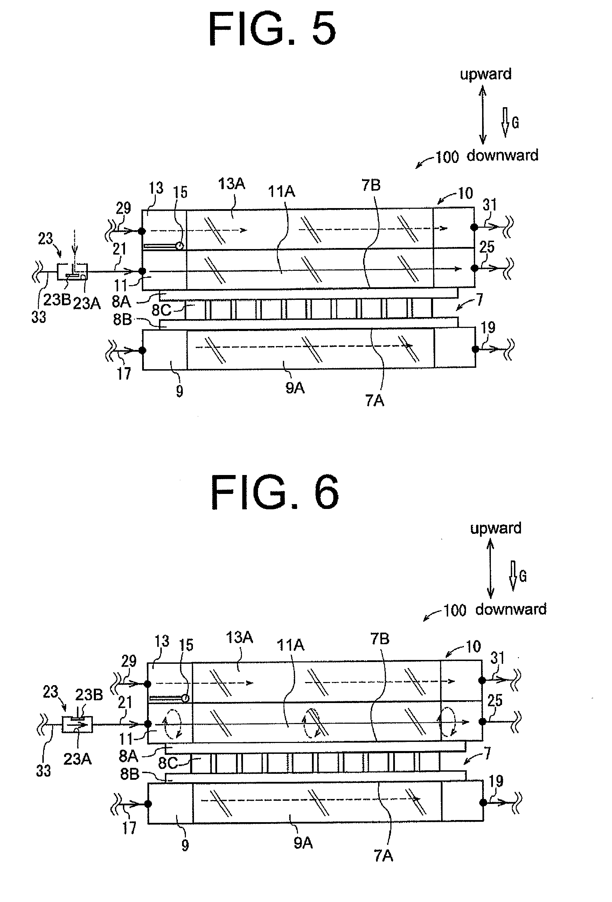

In the dehumidification operation of the air conditioner, the controller 5 activates the air-conditioning fan 19A and sets the three-way valve 27 in such a position that makes the fluid communication between the pipes 25 and 37 and shuts off the communication between the pipes 25 and 35 and also shuts off the communication between the pipes 37 and 35. In addition, the controller 5 opens the flap valve 15 and sets the relief valve 23 in such a position that shuts off the communication between the pipes 21 and 33, as shown in Fig. 5. Thus, the valve member 23B is sunk into the passage 23A, as shown in Fig. 5. Therefore, the passage 23A is opened to the atmosphere and the pipe 21 is filled with air as indicated by the dashed line in Fig. 5.

In the air-conditioning core 100, therefore, the first air-conditioning air is supplied into the first surface-side passage 9 via the pipe 17 and air is supplied into the first passage 11 via the pipe 21. In addition, the second air-conditioning air is supplied into the second passage 13 via the pipe 29 and then flows through the second passage 13 in the direction of dashed arrow in Fig. 5. In this state, the controller 5 causes electric current to be supplied to the Peltier device 7 and controls the direction of the electric current so that the first surface 7A of the Peltier device 7 serves as the heat absorbing surface and that the second surface 7B serves as the heat radiating surface.

In the air-conditioning core 100, therefore, the Peltier device 7 absorbs heat from the first air-conditioning air in the first surface-side passage 9 and radiates heat to the air in the first passage 11. In addition, the heated air in the first passage 11 is radiated to the second air-conditioning air in the second passage 13. Since the air in the first passage 11 has a smaller heat capacity than the above-described cooling water, the second air-conditioning air is not heated very much.

In the air conditioner, therefore, the cooled first air-conditioning air and the efficiently heated second air-conditioning air are blown into the vehicle interior via the pipe 19 and the air-conditioning fan 19A. In this case, the first air-conditioning air and the second air-conditioning air are mixed together in the pipe 19. Therefore, the air conditioned to a desired temperature and dried dehumidifies the air in the vehicle interior efficiently. It is noted that the air in the first passage 11 is released from the vehicle interior via the pipe 37.

In the dehumidification operation of the air conditioner, the Peltier device 7 may radiate heat to the cooling water in the first passage 11. In this case, the controller 5 makes the communication between the pipes 33 and 21 and also the communication between the pipes 25 and 35 as in the case of the above-described cooling operation. In addition, the controller 5 opens the flap valve 15 and activates the air-conditioning fan 19A, the motor-driven pump P1 and the radiating fan 3C. In this state, the controller 5 causes electric current to be supplied to the Peltier device 7 and controls the direction of the electric current so that the first surface 7A of the Peltier device 7 serves as the heat absorbing surface and that the second surface 7B serves as the heat radiating surface.

After the first passage 11 is filled with the cooling water, the controller 5 stops the operation of the motor-driven pump P1. In the air conditioner, therefore, no cooling water flows through the air-conditioning core 100 and the radiator 3, so that no cooling water flows through the first passage 11. In this state, the Peltier device 7 absorbs heat from the first air-conditioning air in the first surface-side passage 9 and radiates heat to the cooling water in the first passage 11. Thus, the first air-conditioning air is cooled and the cooling water is heated.

In this case, the heated cooling water in the first passage 11 is raised against the gravity G, thereby causing convection flow of the cooling water in the first passage 11, as indicated by dashed arrow in Fig. 6. In the air-conditioning core 100 wherein the second passage 13 is located above the first passage 11, the convection flow of the cooling water in the first passage 11 may be used advantageously in that the heat transfer from the cooling water in the first passage 11 to the second air-conditioning air in the second passage 13 is promoted. Thus, the second air-conditioning air in the second passage 13 is heated to a higher temperature. Therefore, the dehumidification operation wherein the cooling water in the first passage 11 is used allows the air in the vehicle interior to be dehumidified under a higher temperature, as compared to the dehumidification operation where the air in the first passage 11 is used. Since the first air-conditioning air in the first surface-side passage 9 radiates heat to the cooling water having a larger heat capacity than the air, the dehumidification may be accomplished with a higher performance.

As described above, in the air-conditioning core 100 of the air conditioner, the first surface-side passage 9 is located adjacent to the first surface 7A of the Peltier device 7 and the first and second passages 11 and 13 are located adjacent to the second surface 7B of the Peltier device 7. The cooling water having a larger heat capacity than the air is allowed to flow through the first passage 11, serving as a heat exchange medium. Therefore, the air conditioner allows the efficiently cooled first air-conditioning air to cool the vehicle interior sufficiently and also allows the efficiently heated first air-conditioning air to heat the vehicle interior sufficiently.

In the air conditioner thus having the first passage 11 and also the second passage 13 both located adjacent to the second surface 7B of the Peltier device 7, the temperature of the vehicle interior is controlled by the first air-conditioning air and the second air-conditioning air and the air in the vehicle interior is dehumidified sufficiently.

In the air conditioner, the relief valve 23 operated by the controller 5 changes the first passage 11 between the state where the passage 11 is filled with cooling water and the state where the passage 11 is filled with air. In the dehumidification operation, the air conditioner can increase the heat transfer of the Peltier device 7 by using the cooling water in the first passage 11 and also decreases the heat transfer of the Peltier device 7 by using the air in the first passage 11. Thus, the air conditioner allows the range of temperature control to be expanded.

Therefore, the air conditioner can offer sufficient air conditioning of the vehicle interior.

In the air conditioner, the first air-conditioning fin 9A is located in the first surface-side passage 9, the heat source-side fin 11A is located in the first passage 11, and the second air-conditioning fin 13A is located in the second passage 13. The provision of the fins 9A and 13A helps to cool or heat the first air-conditioning air in the first surface-side passage 9 and the second air-conditioning air in the second passage 13 efficiently. The fin 11A contributes to efficient cooling or heating of the cooling water or air in the first passage 11.

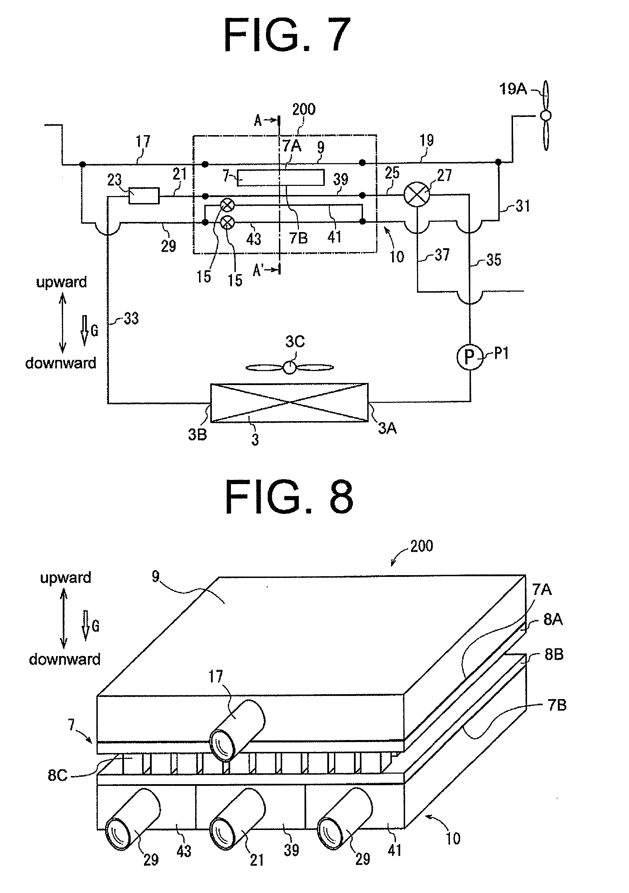

The air conditioner of the second embodiment has an air-conditioning core 200, as shown in Figs. 7 and 8. In the air-conditioning core 200, the second surface-side passage 10 includes a first passage 39, a right-side second passage 41 and a left-side second passage 43. The first passage 39 is held between the right-side second passage 41 and the left-side second passage 43. The right-side second passage 41 is connected at the upstream end thereof as seen in the direction of second air-conditioning air flowing in the passage 41 to one end of the pipe 29 and at the downstream end thereof to one end of the pipe 31. The left-side second passage 43 is connected at the upstream end thereof as seen in the direction of second air-conditioning air flowing through the passage 43 to the one end of the pipe 29 and at the downstream end thereof to the one end of the pipe 31. The first passage 39 is connected at the upstream end thereof as seen in the direction of cooling water or air flowing through the passage 39 to one end of the pipe 21 and at the downstream end thereof to one end of the pipe 25.

As shown in Fig. 8, the first surface-side passage 9 is located adjacent to the first surface 7A of the Peltier device 7, and the first passage 39, the right-side second passage 41 and the left-side second passage 43 of the second surface-side passage 10 are located adjacent to the second surface 7B of the Peltier device 7. As shown in Fig. 7, the right-side second passage 41 and the left-side second passage 43 have therein at positions adjacent to the upstream ends thereof electrically-operated flap valves 15, respectively.

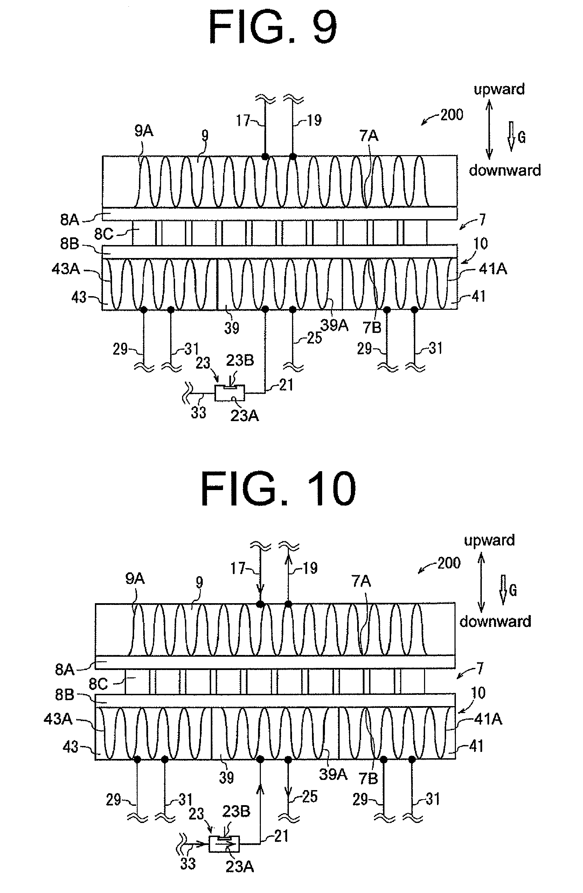

As shown in Fig. 9, the first surface-side passage 9 has therein a first air-conditioning fin 9A and the first passage 39 has therein a heat source-side fin 39A. The right-side second passage 41 has therein a second air-conditioning fin 41A and the left-side second passage 43 has therein a second air-conditioning fin 43A. Each of the fins 9A, 39A, 41A and 43A is formed in a wavy manner as seen in cross section. A plurality of radiator plates may be used as each of the fins 9A, 39A, 41A and 43A as in the case of the air-conditioning core 100 of the first embodiment. The rest of the structure of the air-conditioning core 200 is substantially the same as that of the air-conditioning core 100 of the first embodiment. The rest of the structure of the air conditioner of the second embodiment is substantially the same as that of the air conditioner of the first embodiment. Like reference numerals used in Figs. 7 through 12 designate like parts or elements of the first embodiment and the detailed description of such parts will be omitted.

In the cooling operation and heating operation of the air conditioner, the controller 5 controls the operation of the Peltier device 7 and the relief valve 23 as in the case of the cooling operation and heating operation of the first embodiment (refer to Fig. 4). In the air-conditioning core 200, the first air-conditioning air flows through the first surface-side passage 9 and the cooling water flows through the first passage 39 as shown in Fig. 10. In the cooling operation of the air conditioner, the Peltier device 7 absorbs heat from the first air-conditioning air and radiates heat to the cooling water. In the heating operation of the air conditioner, on the other hand, the Peltier device 7 radiates heat to the first air-conditioning air and absorbs heat from the cooling water.

In the air-conditioning core 200 wherein the first passage 39, the right-side second passage 41 and the left-side second passage 43 are all located adjacent to the second surface 7B of the Peltier device 7, the area of the surface of the first passage 39 that is adjacent to the second surface 7B of the Peltier device 7, or the area of the heat-transfer surface of the first passage 39 is small. Since the heat transferred to the cooling water is larger than the heat transferred to the air, however, absorption of heat from or radiation of heat to the cooling water via the heat source-side fin 39A is performed efficiently. In the cooling operation and heating operation of the air conditioner, the Peltier device 7 can cool or heat the first air-conditioning air efficiently despite the reduced area of the heat-transfer surface of the first passage 39.

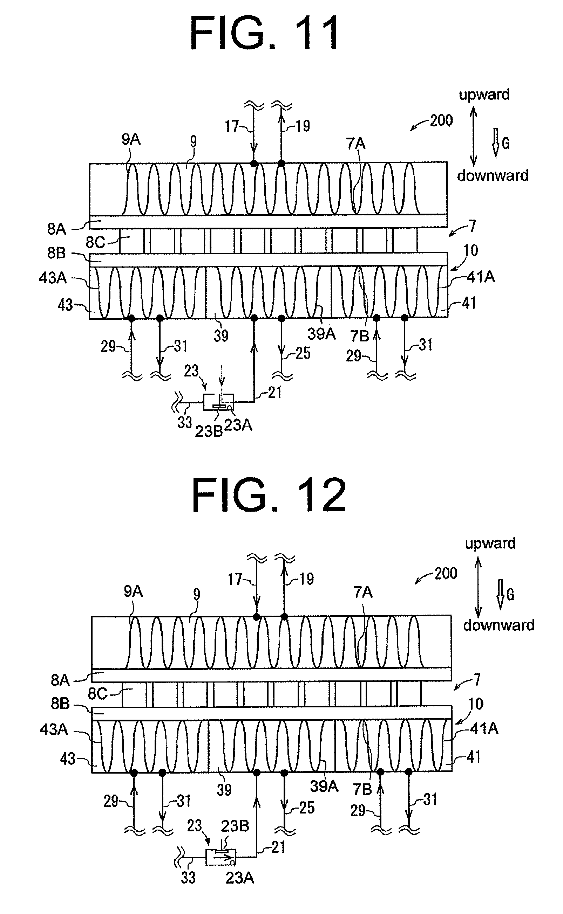

In the dehumidification operation of the air conditioner, the controller 5 controls the operation of the Peltier device 7 and the relief valve 23 as in the case of the dehumidification operation of the air conditioner of the first embodiment (refer to Fig. 5). In the air-conditioning core 200, the first air-conditioning air flows through the first surface-side passage 9 and air flows through the first passage 39 as shown in Fig. 11. The second air-conditioning air flows through the right-side second passage 41 and the left-side second passage 43. The Peltier device 7 absorbs heat from the first air-conditioning air and radiates heat to the air in the first passage 39. The Peltier device 7 also radiates heat to the second air-conditioning air flowing through the right-side second passage 41 and the left-side second passage 43. Thus, the second air-conditioning air is heated. The second air-conditioning air is also heated by the heated air in the first passage 39. In the air-conditioning core 200, therefore, the second air-conditioning air is heated efficiently.

In the dehumidification operation of the air conditioner, the Peltier device 7 may radiate heat to the cooling water in the first passage 39, as shown in Fig. 12. The controller 5 controls the operation of the Peltier device 7 and the relief valve 23 as in the case of the dehumidification operation of the first embodiment (refer to Fig. 6). In this case, the Peltier device 7 radiates heat thereby to heat the second air-conditioning air flowing through the right-side second passage 41 and the left-side second passage 43. In addition, the second air-conditioning air is heated by the heated cooling water in the first passage 39. Therefore, as compared to the case where the air in the first passage 39 is used, the second air-conditioning air is heated to a higher temperature. The other effects of the second embodiment are substantially the same as those of the first embodiment.

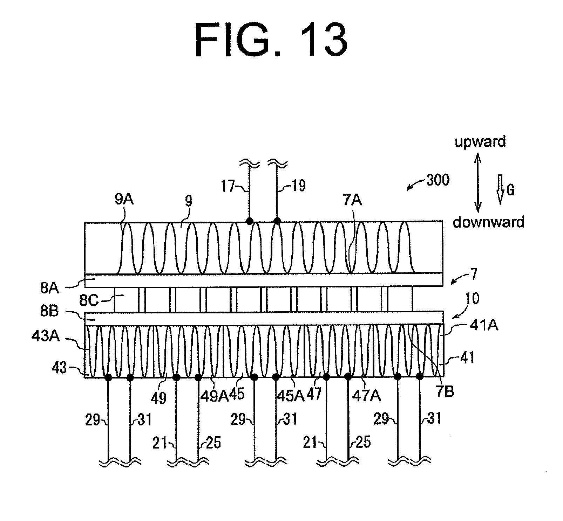

The air conditioner of the third embodiment has an air-conditioning core 300, as shown in Fig. 13. In the air-conditioning core 300, the second surface-side passage 10 has a right-side second passage 41 and a left-side second passage 43, a middle second passage 45, a right-side first passage 47 and a left-side first passage 49. The right-side first passage 47 is held between the right-side second passage 41 and the middle second passage 45. The left-side first passage 49 is held between the left-side second passage 43 and the middle second passage 45. The middle second passage 45 is held between the right-side first passage 47 and the left-side first passage 49.

The right-side second passage 41 is connected at the upstream end thereof as seen in the direction of second air-conditioning air flowing through the passage 41 to one end of the pipe 29 and at the downstream end thereof to one end of the pipe 31. The left-side second passage 43 is connected at the upstream end thereof as seen in the direction of second air-conditioning air flowing through the passage 43 to the one end of the pipe 29 and at the downstream end thereof to the one end of the pipe 31. The middle second passage 45 is connected at the upstream end thereof as seen in the direction of second air-conditioning air flowing through the passage 45 to the one end of the pipe 29 and at the downstream end thereof to the one end of the pipe 31. The right-side first passage 47 is connected at the upstream end thereof as seen in the direction of air or cooling water flowing through the passage 47 to one end of the pipe 21 and at the downstream end thereof to one end of the pipe 25. The left-side first passage 49 is connected at the upstream end thereof as seen in the direction of air or cooling water flowing through the passage 49 to the one end of the pipe 21 and at the downstream end thereof to the one end of the pipe 25.

The middle second passage 45 has therein a second air-conditioning fin 45A. The right-side first passage 47 and the left-side first passage 49 have therein a heat source-side fin 47A and a heat source-side fin 49A, respectively. The rest of the structure of the air-conditioning core 300 is substantially the same as that of the air-conditioning core 200 of the second embodiment.

In the dehumidification operation of the air conditioner, the second air-conditioning air flowing through the right-side second passage 41, the left-side second passage 43 and the middle second passage 45 is heated by heat radiation of the Peltier device 7. The second air-conditioning air flowing through the right-side second passage 41, the left-side second passage 43 and the middle second passage 45 is also heated by the air or cooling water that flows through the right-side first passage 47 and the left-side first passage 49 and is heated by the heat radiation of the Peltier device 7.

Since the second air-conditioning air flowing through the middle second passage 45 is heated by the Peltier device 7, air or cooling water flowing through the right-side first passage 47 and air or cooling water flowing through the left-side first passage 49, it reaches a higher temperature as compared to the second air-conditioning air flowing through the right-side second passage 41 and the left-side second passage 43. The other effects of the third embodiment are substantially the same as those of the second embodiment.

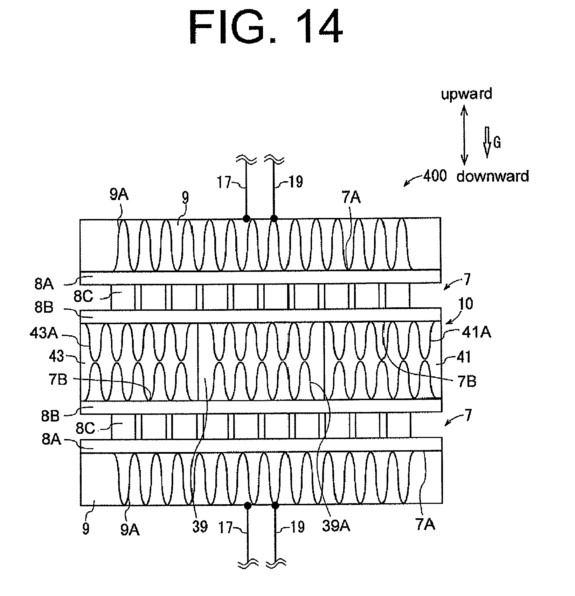

The air conditioner of the fourth embodiment has an air-conditioning core 400, as shown in Fig. 14. In the air-conditioning core 400, two Peltier devices 7 are located one above the other so that their second surfaces 7B face each other, and the second surface-side passage 10 is located between the two Peltier devices 7, or adjacent to the second surfaces 7B of the two Peltier devices 7. The second surface-side passage 10 includes a first passage 39, a right-side second passage 41 and a left-side second passage 43. The first surface-side passages 9 are located adjacent to the first surfaces 7A of the Peltier devices 7, respectively.

Each first surface-side passage 9 has therein a first air-conditioning fin 9A and the first passage 39 has therein two heat source-side fins 39A located one above the other. The right-side second passage 41 has therein two second air-conditioning fins 41A located one above the other and the left-side second passage 43 has therein two second air-conditioning fins 43A located one above the other.

Each first surface-side passage 9 is connected at the upstream end thereof as seen in the direction of first air-conditioning air flowing through the passage 9 to one end of the pipe 17 and at the downstream end thereof to one end of the pipe 19. The right-side second passage 41 is connected at the upstream end thereof as seen in the direction of second air-conditioning air flowing through the passage 41 to one end of the pipe 29 (not shown in Fig. 14, but shown in Fig. 7) and at the downstream end thereof to one end of the pipe 31 (not shown in Fig. 14, but shown in Fig. 7). The left-side second passage 43 is connected at the upstream end thereof as seen in the direction of second air-conditioning air flowing through the passage 43 to the one end of the pipe 29 (not shown in Fig. 14, but shown in Fig. 7) and at the downstream end thereof to the one end of the pipe 31 (not shown in Fig. 14, but shown in Fig. 7). The first passage 39 is connected at the upstream end thereof as seen in the direction of air or cooling water flowing through the passage 39 to one end of the pipe 21 and at the downstream end thereof to one end of the pipe 25 (not shown in Fig. 14, but shown in Fig. 7). The rest of the structure of the air-conditioning core 400 is substantially the same as that of the air-conditioning core 200 of the second embodiment.

In the cooling operation and heating operation of the air conditioner with the air-conditioning core 400 having therein a plurality of first surface-side passages 9, the vehicle interior can be cooled or heated efficiently by the first air-conditioning air flowing through each first surface-side passage 9.

In the dehumidification operation of the air conditioner, the second air-conditioning air flowing through the right-side second passage 41 and the left-side second passage 43, as well as the air or cooling water flowing through the first passage 39 is heated by the heat radiation of the Peltier devices 7. In addition, the second air-conditioning air flowing through the right-side second passage 41 and the left-side second passage 43 is further heated by the heated air or heated cooling water flowing through the first passage 39. In the dehumidification operation of the air conditioner, therefore, the air conditioner allows the second air-conditioning air to be heated to a higher temperature and also allows the air in the vehicle interior to be dehumidified under such higher temperature. The other effects of the fourth embodiment are substantially the same as those of the second embodiment.

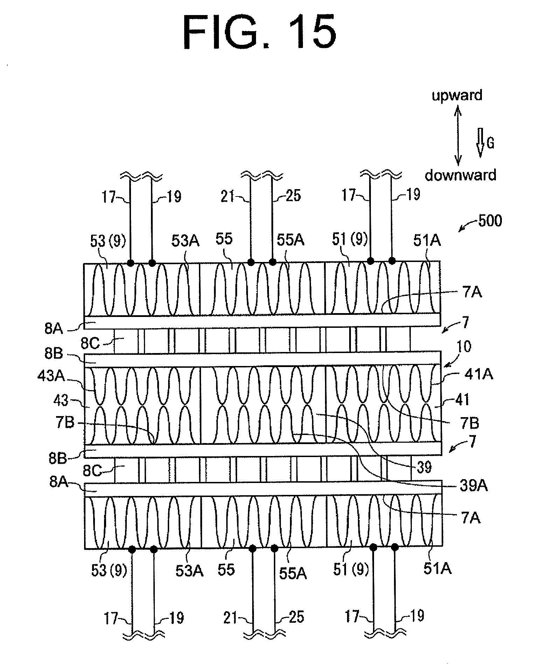

The air conditioner of the fifth embodiment has an air-conditioning core 500, as shown in Fig. 15. In the air-conditioning core 500, the air-conditioning core 400 (refer to Fig. 14) of the air conditioner of the fourth embodiment is modified. As shown in Fig. 15, each first surface-side passage 9 of the air-conditioning core 500 has a right-side first surface-side passage 51 and a left-side first surface-side passage 53 that are located adjacent to the first surface 7A of the corresponding Peltier device 7. A first surface-side first passage 55 is located adjacent to the first surface 7A of each Peltier device 7 and held between the right-side first surface-side passage 51 and the left-side first surface-side passage 53.

Each right-side first surface-side passage 51 has therein an air-conditioning fin 51A and each left-side first surface-side passage 53 has therein an air-conditioning fin 53A. Each first surface-side first passage 55 has therein a heat source-side fin 55A. Each right-side first surface-side passage 51 is connected at the upstream end thereof as seen in the direction of first air-conditioning air flowing through the passage 51 to one end of the corresponding pipe 17 and at the downstream end thereof to one end of the corresponding pipe 19. Each left-side first surface-side passage 53 is connected at the upstream end thereof as seen in the direction of first air-conditioning air flowing through the passage 53 to the one end of the corresponding pipe 17 and at the downstream end thereof to the one end of the corresponding pipe 19. Each first surface-side first passage 55 is connected at the upstream end thereof as seen in the direction of air or cooling water flowing through the first surface-side first passage 55 to one end of the corresponding pipe 21 and at the downstream end thereof to the one end of the corresponding pipe 25. The rest of the structure of the air conditioner of the fifth embodiment is substantially the same as those of the air conditioners of the second and fourth embodiments.

In the cooling operation or heating operation of the air conditioner, the first air-conditioning air flowing through each right-side first surface-side passage 51 and each left-side first surface-side passage 53 is cooled or heated by the heat absorption or heat radiation of the corresponding Peltier device 7. The first air-conditioning air flowing through each right-side first surface-side passage 51 and each left-side first surface-side passage 53 is cooled or heated also by the air or cooling water flowing through the first surface-side first passage 55 held between the right-side first surface-side passage 51 and the left-side first surface-side passage 53. In the cooling operation or heating operation of the air conditioner, therefore, the vehicle interior is cooled or heated further efficiently. The other effects of the air conditioner of the fifth embodiment are substantially the same as those of the air conditioners of the second and fourth embodiments.

The present invention has been described in the context of the first through fifth embodiments, but it is not limited to the embodiments. It is obvious to those skilled in the art that the invention may be practiced in various manners as exemplified below.

The external air may be used as the first air-conditioning air and the second air-conditioning air. Alternatively, the internal air and the external air may be used as the first air-conditioning air and the second air-conditioning air, respectively. Thus, internal air and external air may be used selectively for the first air-conditioning air and the second air-conditioning air.

The air conditioner according to the present invention may dispense with the relief valve 23 so that no air flows through the first passages 11, 39, the right-side first passage 47, the left-side first passage 49 and the first surface-side first passage 55. in this case, it is preferable to connect each of the first passages 11, 39, the right-side first passage 47, the left-side first passage 49 and the first surface-side first passage 55 to the pipe 33 without providing the pipe 21, and also to connect each of the right-side first passage 47, the left-side first passage 49 and the first surface-side first passage 55 to the pipe 35 without providing the pipes 25, 37 and the three-way valve 27. Thus, the structure of the air conditioner may be simplified.

The air-conditioning cores 200 and 300 of the second and third embodiments may be modified so that the first surface 7A of the Peltier device 7 is located below the second surface 7B of the Peltier device 7.

The Peltier device 7 of the air-conditioning cores 200-500 may dispense with the thermoelectric conversion element 8C at a position that is adjacent to the right-side second passage 41 and the left-side second passage 43. The same is true of the thermoelectric conversion element 8C adjacent to the middle second passage 45 of the air-conditioning core 300. In such a case, in the air-conditioning cores 200, 400 and 500, the second air-conditioning air flowing through the right-side second passage 41 and the left-side second passage 43 is heated by air or cooling water flowing through the first passage 39. In the air-conditioning core 300, the second air-conditioning air flowing through the right-side second passage 41 and the left-side second passage 43 is heated by air or cooling water flowing through the right-side first passage 47 and the left-side first passage 49. In the air-conditioning core 300, the second air-conditioning air flowing through the middle second passage 45 is also heated by air or cooling water flowing through the right-side first passage 47 and the left-side first passage 49.

The radiator 3 may also serve to cool the drive unit such as engine or motor. In this case, exhaust heat of the engine or motor may be used to heat the cooling water. The battery 5A may also serve as the power source of the motor.

The present invention is applicable not only to the vehicle air-conditioner but also to a stationary air-conditioner for home or office use.

In one aspect of the present invention, a heat transfer member may be interposed between the first surface-side passage and the first surface of the Peltier device. A heat transfer member may be interposed between the second surface-side passage and the second surface of the Peltier device.

In another aspect of the present invention, the first surface-side passage and the second passage may be opened separately at the downstream ends thereof to the room. Alternatively, the first surface-side passage and the second passage may be merged together within the air conditioner and opened through a single outlet to the room. In the latter case, the second air-conditioning air reheats the cooled first air-conditioning air, thereby dehumidifying the air in the room.

In yet another aspect of the present invention, water, antifreeze fluid or the like may be used as the liquid that serves as the heat exchange medium. Such fluid may be used specifically for heat absorption or heat radiation of the Peltier device. When the air conditioner is used for a vehicle, cooling water for engine may be used.

In yet another aspect of the present invention, it is preferred that the first passage should be opened to the atmosphere via a relief valve. In this case, the first passage may be filled with liquid and additionally air may be present above the liquid in the first passage. Alternatively, the first passage may be filled with air.

In yet another aspect of the present invention, it is preferred that the second passage should have a valve that is operable to open and close the second passage. The use of any valve whose opening is adjustable makes it possible to adjust the flow rate of the second air-conditioning air flowing through the second passage.

In yet another aspect of the present invention, it is preferred that the first passage and the second passage should be disposed one above the other so that the second passage is located on the opposite side of the first passage from the second surface of the Peltier device. In this case, a heat transfer member may be interposed between the second surface-side passage and the first passage and/or between the first passage and the second passage.

In yet another aspect of the present invention, it is preferred that one of the first passage and the second passage should have a right-side passage and a left-side passage and the other of the first passage and the second passage should be held between the right-side passage and the left-side passage. In this case, a heat transfer member may be interposed between the passages.

The air conditioner includes an air-conditioning core, a first air-conditioning passage, a liquid passage and a second air-conditioning passage. The core includes a Peltier device having first and second surfaces, a first surface-side passage and a second surface-side passage. The second surface-side passage has a first passage and a second passage that transfer heat therebetween. The first air-conditioning passage is connected to the first surface-side passage for allowing first air-conditioning air in the first air-conditioning passage to flow through the first surface-side passage. The liquid passage is connected to the first passage for allowing liquid that serves as a heat transfer medium to flow through the first passage. The second air-conditioning passage is connected to the second passage for allowing second air-conditioning air in the second air-conditioning passage to flow through the second passage. The first air-conditioning air and the second air-conditioning air are usable for air conditioning a room.

## Claims

1. An air conditioner comprising:
an air-conditioning core (100, 200, 300, 400, 500) comprising:
a Peltier device (7) having a first surface (7A) and a second surface (7B) one of which serves as a heat absorbing surface and the other of which serves as a heat radiating surface;
a first surface-side passage (9) located adjacent to the first surface (7A) of the Peltier device (7); and
a second surface-side passage (10) located adjacent to the second surface (7B) of the Peltier device (7);
**characterized in that**
the second surface-side passage (10) has a first passage (11, 39, 47, 49) and a second passage (13, 41, 43, 45) that transfer heat therebetween,
wherein a first air-conditioning passage (17, 19) is connected to the first surface-side passage (9) for allowing first air-conditioning air in the first air-conditioning passage (17, 19) to flow through the first surface-side passage (9), wherein the first air-conditioning air is usable for air conditioning a room,
wherein a liquid passage (21, 25, 33, 35) is connected to the first passage (11, 39, 47, 49) for allowing liquid that serves as a heat transfer medium to flow through the first passage (11, 39, 47, 49),
wherein a second air-conditioning passage (29, 31) is connected to the second passage (13, 41, 43, 45) for allowing second air-conditioning air in the second air-conditioning passage (29, 31) to flow through the second passage (13, 41, 43, 45), wherein the second air-conditioning air is usable for air conditioning the room.

2. The air conditioner according to claim 1, **characterized in that** the first passage (11, 39, 47, 49) is opened to the atmosphere via a relief valve (23).

3. The air conditioner according to claim 1 or 2, **characterized in that** the second passage (13, 41, 43, 45) has a valve (15) that is operable to open and close the second passage (13, 41, 43, 45).

4. The air conditioner according to any one of claims 1 through 3, **characterized in that** the Peltier device (7), the first passage (11) and the second passage (13) are disposed in such superposed relation that the first passage (11) is superposed on the second surface (7B) of the Peltier device (7) and the second passage (13) is superposed on the first passage (11).

5. The air conditioner according to any one of claims 1 through 3, **characterized in that** one of the first passage (39, 47, 49) and the second passage (41, 43, 45) has a right-side passage (41, 47) and a left-side passage (43, 49) and the other of the first passage (39, 47, 49) and the second passage (41, 43, 45) is held between the right-side passage (41, 47) and the left-side passage (43, 49).

6. The air conditioner according to any one of claims 1 through 5, **characterized in that** the first surface-side passage (9) has therein a first air-conditioning fin (9A, 51A, 53A), the first passage (11, 39, 47, 49) has therein a heat source-side fin (11A, 39A, 47A, 49A), and the second passage (13, 41, 43, 45) has therein a second air-conditioning fin (13A, 41A, 43A, 45A).
